(19) Europäisches Patentamt
European Patent Office
Office européen des brevets

(11) **EP 4 318 112 A1**

(12) **EUROPEAN PATENT APPLICATION**
published in accordance with Art. 153(4) EPC

(43) Date of publication:
**07.02.2024  Bulletin 2024/06**

(21) Application number: **22780631.2**

(22) Date of filing: **25.03.2022**

(51) International Patent Classification (IPC):
*G02F 1/1334* *(2006.01)*    *G02F 1/13* *(2006.01)*

(52) Cooperative Patent Classification (CPC):
**G02F 1/13; G02F 1/1334**

(86) International application number:
**PCT/JP2022/014646**

(87) International publication number:
**WO 2022/210418 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **30.03.2021   JP 2021056533**

(71) Applicant: **Nitto Denko Corporation
Ibaraki-shi, Osaka 567-8680 (JP)**

(72) Inventors:
• **TAKEMOTO, Hiroyuki
Ibaraki-shi, Osaka 567-8680 (JP)**

• **OTSUKA, Masanori
Ibaraki-shi, Osaka 567-8680 (JP)**
• **KANEKO, Keita
Ibaraki-shi, Osaka 567-8680 (JP)**
• **SHIBUYA, Akihiro
Ibaraki-shi, Osaka 567-8680 (JP)**
• **HIRAI, Mariko
Ibaraki-shi, Osaka 567-8680 (JP)**

(74) Representative: **Hoffmann Eitle
Patent- und Rechtsanwälte PartmbB
Arabellastraße 30
81925 München (DE)**

(54) **POLYMER DISPERSED LIQUID CRYSTAL FILM AND MANUFACTURING METHOD THEREFOR**

(57)     The present invention provides a polymer dispersed liquid crystal (PDLC) film that achieves a haze (light diffusibility) capable of exhibiting a shielding function, and is improved in backscattering ratio. The PDLC film according to an embodiment of the present invention includes a first transparent conductive film (10), a polymer dispersed liquid crystal layer (20), and a second transparent conductive film (30) in the stated order. The polymer dispersed liquid crystal layer contains a polymer matrix (22) and droplets of a liquid crystal compound (24) dispersed in the polymer matrix. An average particle diameter (d) of the droplets when viewed from a direction perpendicular to a main surface of the PDLC film is from 0.3 um to 0.9 um. A volume ratio of the droplets in the polymer dispersed liquid crystal layer is from 20% to 70%. The liquid crystal compound has a birefringence of from 0.20 to 0.50. The polymer dispersed liquid crystal layer has a thickness of from 5 um to 40 um.

Fig.2

(a)

(b)

EP 4 318 112 A1

**Description**

Technical Field

The present invention relates to a polymer dispersed liquid crystal film and a method of producing the polymer dispersed liquid crystal film.

Background Art

A polymer dispersed liquid crystal (hereinafter sometimes referred to as "PDLC") film including a PDLC layer between a pair of transparent electrode layers can change the extent to which transmitted light is scattered in the PDLC layer in accordance with the quantity of a voltage applied to the layer. The film can switch a state in which the light is scattered (a scattering state) and a state in which the light is transmitted (a non-scattering state or a transparent state) by, for example, switching a voltage applied state and a voltage non-applied state. Specifically, the PDLC layer contains a polymer matrix and droplets of a liquid crystal compound (hereinafter sometimes referred to as "liquid crystal droplets") dispersed in the polymer matrix, and the liquid crystal droplets serve as scattering particles to cause light scattering owing to a difference in refractive index between the liquid crystal compound in each of the liquid crystal droplets and the polymer matrix.

Examples of the light scattering caused by the PDLC film include forward scattering and backscattering, and the development of the PDLC has hitherto been promoted in the direction of suppressing the backscattering from the viewpoint of, for example, improving brightness. However, it is conceived that, for example, when the PDLC film having a high backscattering ratio is applied to a window, a heat-shielding effect can be obtained in the daytime by scattering sunlight outside a room, and the interior of the room can be made brighter at night by scattering room illumination light inside the room. In addition, it is conceived that white and black colors can be displayed by laminating the PDLC film with a light absorber, and hence the PDLC film is also useful as a display.

As an approach to improving the backscattering ratio of the PDLC film, in Non Patent Literature 1, there is a proposal of reducing the particle diameters of the liquid crystal droplets.

Citation List

Non Patent Literature

[NPL 1] G. Paul Montgomery Jr., Proc. SPIE 1455, Liquid-Crystal Devices and Materials, (1 June 1991)

Summary of Invention

Technical Problem

When the inventors of the present invention produced a PDLC layer containing liquid crystal droplets each having a diameter of 0.3 um through UV irradiation using a mixture of 60 wt% of a UV-polymerizable monomer and 40 wt% of a liquid crystal compound in accordance with the disclosure of Non Patent Literature 1, a large amount of the liquid crystal compound was dissolved in a polymer matrix at the time of the polymerization, and a ratio of the liquid crystal droplets in the PDLC layer became 4 vol%. As a result, the backscattering ratio of the PDLC film was 25%, and hence it was recognized that the PDLC film was susceptible to further improvement.

A primary object of the present invention is to provide a PDLC film that achieves a haze (light diffusibility) capable of exhibiting a shielding function, and is improved in backscattering ratio.

Solution to Problem

According to one aspect of the present invention, there is provided a polymer dispersed liquid crystal film, including in the following order: a first transparent conductive film; a polymer dispersed liquid crystal layer; and a second transparent conductive film, wherein the polymer dispersed liquid crystal layer contains a polymer matrix and droplets of a liquid crystal compound dispersed in the polymer matrix, wherein an average particle diameter of the droplets when viewed from a direction perpendicular to a main surface of the polymer dispersed liquid crystal film is from 0.3 um to 0.9 um, wherein a volume ratio of the droplets in the polymer dispersed liquid crystal layer is from 20% to 70%, wherein the liquid crystal compound has a birefringence of from 0.20 to 0.50, and wherein the polymer dispersed liquid crystal layer has a thickness of from 5 um to 40 um.

In one embodiment, the polymer dispersed liquid crystal film has a haze at a time of application of a voltage lower than a haze at a time of application of no voltage.

In one embodiment, a content ratio of the liquid crystal compound in the polymer dispersed liquid crystal layer is from 30 wt% to 80 wt%.

In one embodiment, the polymer dispersed liquid crystal film has a haze of 90% or more and a backscattering ratio of 30% or more at a time of application of no voltage.

According to another aspect of the present invention, there is provided a method of producing the polymer dispersed liquid crystal film, including: applying an emulsion application liquid containing a resin for forming a polymer matrix and a liquid crystal compound to a surface of a first transparent conductive film to form an applied layer; and drying the applied layer to form a polymer dispersed liquid crystal layer containing a polymer matrix and droplets of a liquid crystal compound dispersed in the polymer matrix.

In one embodiment, the emulsion application liquid contains liquid crystal compound particles having an average particle diameter of from 0.2 um to 0.9 um.

Advantageous Effects of Invention

According to the present invention, the PDLC film that achieves both of a practically sufficient haze and a high backscattering ratio can be obtained by, for example, using a liquid crystal compound having a predetermined birefringence, adjusting the particle diameters and volume ratio of liquid crystal droplets, and setting the thickness of the PDLC layer within a predetermined range.

Brief Description of Drawings

FIG. 1 is a schematic sectional view of a PDLC film according to one embodiment of the present invention.
FIG. 2(a) is a schematic sectional view of a PDLC layer according to one embodiment of the present invention, and
FIG. 2(b) is a schematic plan view of the PDLC layer.

Description of Embodiments

Preferred embodiments of the present invention are described below. However, the present invention is not limited to these embodiments. In this description, the expression "from ... to …" representing a numerical range includes the upper limit and lower limit numerical values thereof.

A. Polymer Dispersed Liquid Crystal Film

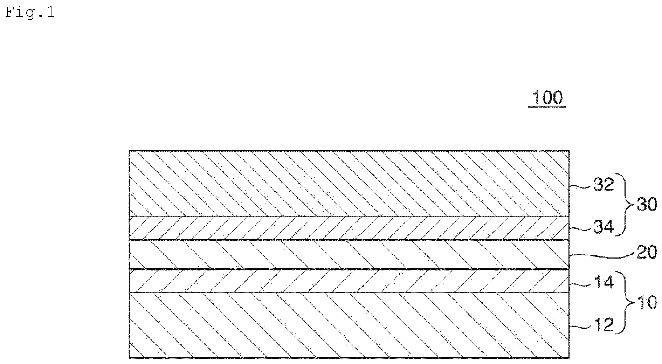

FIG. 1 is a schematic sectional view of a PDLC film according to one embodiment of the present invention. A PDLC film 100 includes a first transparent conductive film 10, a PDLC layer 20, and a second transparent conductive film 30 in the stated order. The PDLC layer 20 contains a polymer matrix and droplets of a liquid crystal compound dispersed in the polymer matrix. Typically, an average particle diameter of the droplets when viewed from a direction perpendicular to a main surface of the PDLC film is from 0.3 um to 0.9 um, a volume ratio of the droplets in the PDLC layer 20 is from 20% to 70%, the liquid crystal compound has a birefringence of from 0.2 to 0.5, and the PDLC layer 20 has a thickness of from 5 um to 40 um. According to the PDLC film having such configuration, a practically sufficient haze and a high backscattering ratio can both be achieved.

As described above, the light diffusibility of the PDLC film (consequently, its haze) changes in accordance with a voltage to be applied. In one embodiment, at the time of application of a voltage, the PDLC film is in a transparent state and has a lower haze than that at the time of application of no voltage (normal mode). In another embodiment, at the time of application of a voltage, the PDLC film is in a scattering state and has a higher haze than that at the time of application of no voltage (reverse mode).

According to the PDLC film of the normal mode, the liquid crystal compound in the PDLC layer is not aligned at the time of application of no voltage, and hence the film is in the scattering state. When a voltage is applied, the liquid crystal compound is aligned, and the refractive index of the liquid crystal compound and the refractive index of the polymer matrix match with each other. As a result, the film can be in the transparent state.

According to the PDLC film of the reverse mode, with an alignment film arranged on a surface of the transparent conductive film, the liquid crystal compound in the PDLC layer is aligned at the time of application of no voltage, and hence the film is in the transparent state. When a voltage is applied, the alignment of the liquid crystal compound is disturbed, and hence the film can be in the scattering state.

The total light transmittance of the PDLC film in the transparent state may be preferably from 40% to 99%, more preferably from 50% to 95%. In addition, the total light transmittance of the PDLC film in the scattering state may be preferably from 5% to 65%, more preferably from 10% to 60%.

The haze of the PDLC film in the transparent state may be preferably 50% or less, more preferably 35% or less. In addition, the haze of the PDLC film in the scattering state may be preferably from 90.0% to 99.9%, more preferably from 95.0% to 99.8%, still more preferably from 98.0% to 99.7%. When the haze in the scattering state is high, an excellent shielding property can be achieved.

The backscattering ratio of the PDLC film in the transparent state may be preferably 20% or less. In addition, the backscattering ratio of the PDLC film in the scattering state may be preferably 30% or more, more preferably from 30% to 80%. Herein, the backscattering ratio refers to a ratio of the quantity of light scattered to an incident plane side to the quantity of incident light when light enters the PDLC film, and may be determined with a goniophotometer. For example, the backscattering ratio may be determined by: measuring scattered light except specular reflection light for each angle with the goniophotometer (e.g., Nikka Densok Limited, model number: GP-4L) when light from a parallel light source (e.g., laser light having a wavelength of 550 nm) is allowed to vertically enter the PDLC film; calculating a bidirectional scattering distribution function (BSDF); and calculating a ratio of the quantity of light scattered behind the film (e.g., a scattering polar angle of 90° or more and less than 180°) to the quantity of the incident light. In addition, the backscattering ratio may also be measured by: irradiating a surface of the PDLC film arranged on a reflection integrating sphere with parallel light from the front; and measuring the quantity of reflected and scattered light with the reflection integrating sphere. Although an SCE value measured with a spectrocolorimeter (reflectance excluding specular reflected light) may serve as the backscattering ratio, when an SCI value is adopted, the measurement also includes specular reflected light. As a result, a higher number by from 5% to 10% tends to be given as compared to the result with the goniophotometer. Accordingly, herein, the value determined with the goniophotometer is adopted as the backscattering ratio.

As another method of increasing the backscattering ratio of the PDLC film, there is given a method involving arranging a reflection layer on the surface of the PDLC film or inside thereof (e.g., ITO having a high reflection ratio is applied), but according to such method, there is a problem in that the backscattering ratio in the transparent state also increases. In contrast, the PDLC film according to the embodiment of the present invention has a feature in that, as described above, the backscattering ratio in the scattering state is sufficiently improved while the backscattering ratio in the transparent state is low.

In one embodiment, the backscattering ratio of the PDLC film in the scattering state is larger than the backscattering ratio in the transparent state, preferably larger by 10% or more.

The total thickness of the PDLC film is, for example, from 50 um to 500 $\mu$m, preferably from 80 um to 250 $\mu$m.

Each of the constituent elements of the PDLC film is specifically described below.

A-1. First Transparent Conductive Film

Any appropriate conductive film may be used as the first transparent conductive film as long as the effects of the present invention are obtained.

The first transparent conductive film **10** illustrated in FIG. **1** includes a first transparent substrate **12** and a first transparent electrode layer **14** arranged on one side (PDLC layer **20** side) thereof. Although not shown, the first transparent conductive film may further include any appropriate function layer as required. For example, the first transparent conductive film may include a hard coat layer on one surface, or each of both surfaces, of the first transparent substrate. In addition, for example, the first transparent conductive film may include a refractive index-adjusting layer between the first transparent substrate and the first transparent electrode layer.

The surface resistance value of the first transparent conductive film is preferably from 1 $\Omega/\square$ to 1,000 $\Omega/\square$, more preferably from 5 $\Omega/\square$ to 300 $\Omega/\square$, still more preferably from 10 $\Omega/\square$ to 200 $\Omega/\square$.

The haze of the first transparent conductive film is preferably 20% or less, more preferably 10% or less, still more preferably from 0.1% to 10%.

The total light transmittance of the first transparent conductive film is preferably 30% or more, more preferably 60% or more, still more preferably 80% or more.

A-1-1. First Transparent Substrate

The first transparent substrate may be formed by using any appropriate material. A polymer substrate, such as a film or a plastic substrate, is preferably used as a material for forming the substrate.

The polymer substrate is typically a polymer film containing a thermoplastic resin as a main component. Examples of the thermoplastic resin include: a cycloolefin-based resin such as polynorbornene; an acrylic resin; a polyester-based resin such as polyethylene terephthalate; a polycarbonate resin; and a cellulose-based resin. Of those, a polynorbornene resin, a polyethylene terephthalate resin, or a polycarbonate resin may be preferably used. The thermoplastic resins may be used alone or in combination thereof.

The thickness of the first transparent substrate is preferably from 20 um to 200 $\mu$m, more preferably from 30 um to 100 $\mu$m.

A-1-2. First Transparent Electrode Layer

The first transparent electrode layer may be formed by using, for example, a metal oxide, such as an indium tin oxide (ITO), zinc oxide (ZnO), or tin oxide ($SnO_2$). In this case, the metal oxide may be an amorphous metal oxide or a crystallized metal oxide. The first transparent electrode layer may also be formed of a metal nanowire such as a silver nanowire (AgNW), a carbon nanotube (CNT), an organic conductive film, a metal layer, or a laminate thereof. The first transparent electrode layer may be patterned into a desired shape depending on the purposes.

The thickness of the first transparent electrode layer is preferably from 0.01 um to 0.20 um, more preferably from 0.01 um to 0.1 $\mu$m.

The first transparent electrode layer is arranged on one surface of the first transparent substrate by, for example, sputtering. After the formation of a metal oxide layer by the sputtering, the layer may be crystallized by annealing. The annealing is performed by, for example, thermally treating the layer at from 120°C to 300°C for from 10 minutes to 120 minutes.

A-1-3. Hard Coat Layer

The hard coat layer imparts scratch resistance and surface smoothness to the PDLC film, and can contribute to improvement in handleability. The hard coat layer may be, for example, a cured layer of any appropriate UV-curable resin. Examples of the UV-curable resin include an acrylic resin, a silicone-based resin, a polyester-based resin, a urethane-based resin, an amide-based resin, and an epoxy-based resin.

The hard coat layer may be formed by: applying an application liquid containing a monomer or an oligomer of the UV-curable resin, and as required, a photopolymerization initiator or the like, to the first transparent substrate to form an applied layer; drying the applied layer; and irradiating the dried applied layer with UV light to cure the applied layer.

The thickness of the hard coat layer is preferably from 0.4 um to 40 um, more preferably from 1 um to 10 $\mu$m.

A-1-4. Refractive Index-adjusting Layer

The refractive index-adjusting layer can suppress interface reflection between the first transparent substrate and the first transparent electrode layer. The refractive index-adjusting layer may be formed of a single layer, or may be a laminate of two or more layers.

The refractive index of the refractive index-adjusting layer is preferably from 1.3 to 1.8, more preferably from 1.35 to 1.7, still more preferably from 1.40 to 1.65. Thus, interface reflection between the first transparent substrate and the first transparent electrode layer can be suitably reduced.

The refractive index-adjusting layer is formed from inorganic matter, organic matter, or a mixture of the inorganic matter and the organic matter. Examples of a material for forming the refractive index-adjusting layer include: inorganic matter, such as NaF, $Na_3AlF_6$, LiF, $MgF_2$, $CaF_2$, $SiO_2$, $LaF_3$, $CeF_3$, $Al_2O_3$, $TiO_3$, $Ta_3O_5$, $ZrO_2$, ZnO, ZnS, or $SiO_x$ ("x" represents a number of 1.5 or more and less than 2); and organic matter, such as an acrylic resin, an epoxy resin, a urethane resin, a melamine resin, an alkyd resin, or a siloxane-based polymer. In particular, a thermosetting resin formed of a mixture of a melamine resin, an alkyd resin, and an organic silane condensate is preferably used as the organic matter.

The refractive index-adjusting layer may contain nano-fine particles having an average particle diameter of from 1 nm to 100 nm. The incorporation of the nano-fine particles into the refractive index-adjusting layer can facilitate the adjustment of the refractive index of the refractive index-adjusting layer itself.

The content of the nano-fine particles in the refractive index-adjusting layer is preferably from 0.1 wt% to 90 wt%. In addition, the content of the nano-fine particles in the refractive index-adjusting layer is more preferably from 10 wt% to 80 wt%, still more preferably from 20 wt% to 70 wt%.

Examples of an inorganic oxide for forming the nano-fine particles include silicon oxide (silica), hollow nanosilica, titanium oxide, aluminum oxide, zinc oxide, tin oxide, zirconium oxide, and niobium oxide. Of those, silicon oxide (silica), titanium oxide, aluminum oxide, zinc oxide, tin oxide, zirconium oxide, and niobium oxide are preferred. Those inorganic oxides may be used alone or in combination thereof.

The thickness of the refractive index-adjusting layer is preferably from 10 nm to 200 nm, more preferably from 20 nm to 150 nm, still more preferably from 30 nm to 130 nm. When the thickness of the refractive index-adjusting layer is excessively small, the layer hardly becomes a continuous film. In addition, when the thickness of the refractive index-adjusting layer is excessively large, there is a tendency in that the transparency of the PDLC film in the transparent state reduces or a crack is liable to occur.

The refractive index-adjusting layer may be formed by, for example, an application method, such as a wet method, a gravure coating method, or a bar coating method, a vacuum deposition method, a sputtering method, or an ion plating method through use of the above-mentioned material.

A-2. Second Transparent Conductive Film

The second transparent conductive film **30** illustrated in FIG. **1** includes a second transparent substrate **32** and a second transparent electrode layer **34** arranged on one side (PDLC layer **20** side) thereof. Although not shown, the second transparent conductive film may further include any appropriate function layer as required. For example, the second transparent conductive film may include a hard coat layer on one surface, or each of both surfaces, of the second transparent substrate. In addition, for example, the second transparent conductive film may include a refractive index-adjusting layer between the second transparent substrate and the second transparent electrode layer.
The same description as that of the first transparent conductive film may be applied to the second transparent conductive film. The second transparent conductive film may have the same configuration as that of the first transparent conductive film, or may have a configuration different therefrom.

A-3. Polymer Dispersed Liquid Crystal Layer

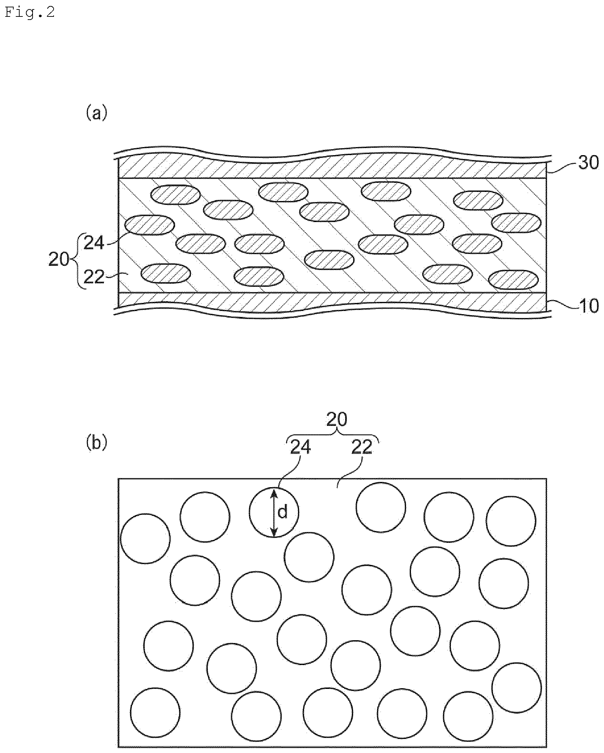

FIG. **2(a)** is a schematic vertical sectional view of the PDLC layer according to one embodiment of the present invention, and FIG. **2(b)** is a schematic plan view of the PDLC layer. The PDLC layer **20** includes a polymer matrix **22** serving as a base material and liquid crystal droplets **24** dispersed in the polymer matrix **22.**
The average particle diameter "d" of the liquid crystal droplets when viewed from a direction perpendicular to the main surface of the PDLC film is typically 0.3 um or more, preferably 0.4 um or more. In addition, the average particle diameter "d" of the liquid crystal droplets is typically 0.9 um or less, preferably 0.8 um or less. When the average particle diameter of the liquid crystal droplets is smaller than 0.3 um, a liquid crystal droplet size is smaller than a wavelength of light, and hence light is transmitted through the liquid crystal droplets without being scattered, and consequently, there may occur a problem in that a sufficient haze of the film (consequently, its shielding property) is not obtained. In addition, when the average particle diameter is more than 0.9 um, scattered light in the scattering state is directed forward. As a result, a target backscattering ratio may not be obtained. The average particle diameter "d" of the liquid crystal droplets is a volume-average particle diameter.
The average particle diameter "d" of the liquid crystal droplets preferably has a relatively narrow particle size distribution. When the uniformity of the particle diameters of the liquid crystal droplets is improved, the content ratios of liquid crystal droplets each having a particle diameter that provides a high forward scattering ratio (e.g., a particle diameter of 1.0 um or more) and liquid crystal droplets each having a particle diameter that does not contribute to scattering (e.g., a particle diameter of less than 0.3 $\mu$m) in the PDLC layer are reduced, and hence the following effect can be obtained: a high haze and a high backscattering ratio can be achieved. The coefficient of variation (CV value) of the average particle diameter "d" may be, for example, less than 0.50, and may be preferably 0.40 or less.
The particle diameters of the liquid crystal droplets may be measured by: removing the liquid crystal droplets with hexane or the like directly or after the peeling of the transparent conductive film from the main surface of the PDLC layer, and observing the size of the resultant hole with an electron microscope such as a SEM; or observing the size of a hole, which is obtained by cutting out a section of the PDLC layer and removing the liquid crystal droplets with hexane or the like, with a SEM (or three-dimensional SEM) or a TEM.
The volume ratio of the liquid crystal droplets in the PDLC layer is, for example, from 20% to 70%, preferably from 20% to 65%, more preferably from 25% to 60%. When the volume ratio of the liquid crystal droplets is more than 70%, sufficient light scattering may not occur between the polymer matrix and the liquid crystal compound. In addition, when the volume ratio is more than 70%, the liquid crystal droplets having a target average particle diameter may not be obtained owing to the coalescence of the liquid crystal droplets adjacent to each other. In addition, when the volume ratio of the liquid crystal droplets is less than 20%, a sufficient number of the liquid crystal droplets are not present in the PDLC layer. As a result, sufficient light scattering may not occur and sufficient backscattering is not obtained.
The shape of each of the liquid crystal droplets may be truly spherical or non-truly spherical. In one embodiment, in the PDLC layer of the normal mode, as shown in FIG. 2(a), the shape of each of the liquid crystal droplets may be an oblate shape (an oblate ellipsoid) that is shorter in the thickness direction than in the horizontal direction.
A polymer network liquid crystal (PNLC) is known as a technology of exhibiting a light control function through utilization of a difference in refractive index between the liquid crystal compound and the polymer matrix in the same manner as in the PDLC. The PNLC has a structure in which a polymer network is present in a liquid crystal compound, and is different from the PDLC, in which liquid crystal droplets are individually dispersed in a polymer matrix, in that liquid crystal domains are at least partially linked to each other. In the PNLC, the liquid crystal domains adjacent to each other are partially continuous, and hence a size as a scattering body is large even when the size of each of the liquid crystal domains itself is small. Accordingly, a large backscattering ratio is not obtained.

Any appropriate liquid crystal compound may be used as the liquid crystal compound as long as the effects of the present invention are obtained. For example, a liquid crystal compound having a birefringence ($\Delta n=n_e-n_o$; $n_e$ represents the refractive index of a molecule of the liquid crystal compound in a major axis direction, and $n_o$ represents the refractive index of the molecule of the liquid crystal compound in a minor axis direction) of from 0.20 to 0.50 at a wavelength of 589 nm may be preferably used. When the birefringence is less than 0.20, the liquid crystal droplets having small particle diameters cannot cause sufficient light scattering, and a sufficient haze and backscattering ratio may not be obtained in the scattering state. The birefringence of the liquid crystal compound is more preferably from 0.20 to 0.45, still more preferably from 0.25 to 0.45.

The liquid crystal compound has an abnormal light refractive index that is preferably higher by from 0.2 to 0.5, more preferably higher by from 0.25 to 0.45 than the refractive index of the polymer matrix. Thus, when the liquid crystal compound is in a non-aligned state (consequently, the PDLC film is in the scattering state), sufficient differences in refractive indices occur between the liquid crystal droplets and the polymer matrix, and hence a sufficient haze and backscattering ratio can be obtained.

The dielectric anisotropy of the liquid crystal compound may be positive or negative. The liquid crystal compound preferably has positive dielectric anisotropy from the viewpoint of aligning the liquid crystal compound in the thickness direction by the application of a voltage. It is desired that the liquid crystal compound have a $\Delta\varepsilon$ of, for example, from 3 to 100, preferably from 5 to 50.

Examples of the liquid crystal compound include nematic-type, smectic-type, and cholesteric-type liquid crystal compounds. Of those, a nematic-type liquid crystal compound is preferably used from the viewpoint of achieving excellent transparency of the PDLC film in the transparent state. Examples of the nematic-type liquid crystal compound include a biphenyl-based compound, a phenyl benzoate-based compound, a cyclohexylbenzene-based compound, an azoxybenzene-based compound, an azobenzene-based compound, an azomethine-based compound, a terphenyl-based compound, a biphenyl benzoate-based compound, a cyclohexylbiphenyl-based compound, a phenylpyridine-based compound, a cyclohexylpyrimidine-based compound, and a cholesterol-based compound.

The content ratio of the liquid crystal compound in the PDLC layer is, for example, from 30 wt% to 80 wt%, preferably from 35 wt% to 70 wt%.

A resin for forming the polymer matrix may be appropriately selected in accordance with, for example, the light transmittance of the resin, the refractive index of the liquid crystal compound, and the adhesive strengths of the layer with the transparent conductive films. For example, a watersoluble resin or a water-dispersible resin, such as a urethane-based resin, a polyvinyl alcohol-based resin, a polyethylene-based resin, a polypropylene-based resin, or an acrylic resin, may be preferably used.

The content ratio of the resin for forming the polymer matrix in the PDLC layer is, for example, from 20 wt% to 70 wt%, preferably from 30 wt% to 65 wt%.

The thickness of the PDLC layer is typically from 5 um to 40 $\mu$m, preferably from 7 um to 35 $\mu$m, more preferably from 10 um to 30 um. When the thickness is less than 5 $\mu$m, a sufficient haze and backscattering ratio may not be obtained. In addition, when the thickness is more than 40 $\mu$m, the haze in the transparent state may be increased.

B. Method of producing Polymer Dispersed Liquid Crystal Film

A method of producing a PDLC film according to one embodiment of the present invention includes: applying an emulsion application liquid containing a resin for forming a polymer matrix and a liquid crystal compound to a surface of a first transparent conductive film to form an applied layer (applied layer-forming step); and drying the applied layer to form a PDLC layer containing a polymer matrix and droplets of a liquid crystal compound dispersed in the polymer matrix (PDLC layer-forming step). The method of producing a PDLC film according to this embodiment typically further includes laminating a second transparent conductive film on the formed PDLC layer (second transparent conductive film-laminating step). According to such production method, liquid crystal compound particles having small particle diameters (e.g., average particle diameter: from 0.2 um to 0.9 $\mu$m) can be produced in advance and mixed in the application liquid at a high concentration, and hence the liquid crystal droplets having an average particle diameter of from 0.3 um to 0.9 um can be incorporated into the PDLC layer at a high volume ratio. Hitherto, it has been known that the liquid crystal droplets having small particle diameters hardly cause a sufficient haze. In addition, it has been difficult to form the PDLC layer containing the liquid crystal droplets having small particle diameters at a high ratio owing to dissolution of the liquid crystal compound in the polymer matrix. However, the PDLC layer produced by using the emulsion application liquid containing the liquid crystal compound particles having small particle diameters as a dispersoid may contain the liquid crystal droplets having small particle diameters at a high volume ratio. Consequently, the PDLC layer shows a high backscattering property, and a high haze can be achieved.

As a method of forming the PDLC layer, there is given, for example, a polymerization-induced phase separation method involving applying and polymerizing a polymerizable composition containing a monomer for forming a matrix and a liquid crystal compound, in addition to the method of applying and drying the emulsion application liquid. In the polymerization-induced phase separation method, along with the polymerization of the monomer for forming a matrix by UV irradiation or the like, compatibility between the polymer matrix and the liquid crystal compound becomes poor. As a result, liquid crystal droplets are generated, and the particle diameters of the liquid crystal droplets and the concentration of the liquid crystal compound therein increase with time. Accordingly, it is difficult to form the PDLC layer containing the liquid crystal droplets having small particle diameters at a high volume ratio.

B-1. Applied Layer-forming Step

In the applied layer-forming step, the emulsion application liquid containing the resin for forming a polymer matrix and the liquid crystal compound is applied to a surface of the first transparent conductive film to form an applied layer. The emulsion application liquid is typically applied to the surface of the first transparent conductive film on the transparent electrode layer side.

The emulsion application liquid typically contains a solvent, and resin particles for forming a polymer matrix (hereinafter sometimes referred to as "polymer particles") and liquid crystal compound particles (hereinafter sometimes referred to as "liquid crystal capsules") each dispersed in the solvent. Alternatively, the emulsion application liquid may contain a solvent, a resin for forming a polymer matrix dissolved in the solvent, and liquid crystal capsules. The emulsion application liquid may further contain any appropriate additive as required. Examples of the additive include a leveling agent and a cross-linking agent.

The average particle diameter of the polymer particles may be preferably from 10 nm to 500 nm, more preferably from 20 nm to 400 nm, still more preferably from 50 nm to 300 nm.

The content ratio of the resin for forming a polymer matrix in the solid content of the emulsion application liquid may be preferably from 20 wt% to 70 wt%, more preferably from 30 wt% to 65 wt%.

The average particle diameter d' of the liquid crystal capsules may be, for example, 0.2 um or more, preferably 0.3 um or more, more preferably 0.4 um or more. In addition, the average particle diameter d' of the liquid crystal capsules is, for example, 0.9 pm or less, preferably 0.8 um or less. When the average particle diameter d' of the liquid crystal capsules is excessively small, the average particle diameter of the liquid crystal droplets in the PDLC layer becomes excessively small, and hence a sufficient haze and backscattering ratio may not be obtained. In addition, when the average particle diameter d' is excessively large, the average particle diameter of the liquid crystal droplets in the PDLC layer becomes excessively large, and hence a sufficient backscattering ratio may not be obtained. The average particle diameter d' of the liquid crystal capsules is a volume-average particle diameter.

The average particle diameter d' of the liquid crystal capsules in the emulsion application liquid may have a relatively narrow particle size distribution. When the uniformity of the particle diameters of the liquid crystal capsules is improved, the content ratios of liquid crystal droplets each having a particle diameter that provides a high forward scattering ratio (e.g., a particle diameter of 1.0 um or more) and liquid crystal droplets each having a particle diameter that does not contribute to scattering (e.g., a particle diameter of less than 0.3 $\mu$m) in the PDLC layer are reduced, and hence the following effect can be obtained: a high haze and a high backscattering ratio can be achieved. The coefficient of variation (CV value) of the average particle diameter d' of the liquid crystal capsules in the emulsion application liquid may be, for example, less than 0.50, and may be preferably 0.40 or less, more preferably 0.30 or less.

The content ratio of the liquid crystal compound in the solid content of the emulsion application liquid may be preferably from 30 wt% to 80 wt%, more preferably from 35 wt% to 70 wt%.

Examples of the leveling agent include an acrylic leveling agent, a fluorine-based leveling agent, and a silicone-based leveling agent. Examples of the acrylic leveling agent include POLYFLOW No. 36, POLYFLOW No. 56, POLYFLOW No. 85HF, and POLYFLOW No. 99C (all of which are manufactured by Kyoeisha Co., Ltd.). Examples of the fluorine-based leveling agent include MEGAFACE F-444, MEGAFACE F-470N, and MEGAFACE F-556 (all of which are manufactured by DIC Corporation). Examples of the silicone-based leveling agent include LE303 (manufactured by Kyoeisha Co., Ltd.) and GRANDIC PC4100 (manufactured by DIC Corporation). The addition of the leveling agent to the emulsion application liquid can suppress unevenness of a surface of the applied layer to prevent the inclusion of fine air bubbles at the time of lamination of the second transparent conductive film. Consequently, problems, such as reductions in transparency of the PDLC film at the time of application of a voltage and the reliability thereof, can be avoided.

The content ratio of the leveling agent is preferably from 0.05 part by weight to 10 parts by weight, more preferably from 0.1 part by weight to 1 part by weight with respect to 100 parts by weight of the emulsion application liquid.

Examples of the cross-linking agent include an aziridine-based cross-linking agent and an isocyanate-based cross-linking agent. The use of the cross-linking agent enables the formation of a PDLC layer containing a polymer matrix having a cross-linked structure.

The content ratio of the cross-linking agent is preferably from 0.5 part by weight to 10 parts by weight, more preferably from 0.8 part by weight to 5 parts by weight with respect to 100 parts by weight of the emulsion application liquid.

The emulsion application liquid may be prepared by, for example, mixing a resin emulsion containing polymer particles or a resin solution, a liquid crystal emulsion containing liquid crystal capsules, and an optional component (e.g., the leveling agent or the cross-linking agent). A solvent or a dispersant may be further added at the time of the mixing as required. Alternatively, the emulsion application liquid may also be prepared by, for example, adding the liquid crystal compound and the resin for forming a polymer matrix to the solvent, and mechanically dispersing the materials in the solvent. Water or a mixed solvent of water and a water-miscible organic solvent may be preferably used as the solvent.

In one embodiment, it is preferred to produce a liquid crystal emulsion containing liquid crystal capsules whose particle diameters and particle diameter distribution have been controlled to predetermined values in advance, and to prepare the emulsion application liquid using the liquid crystal emulsion. When the liquid crystal emulsion containing the liquid crystal capsules having a predetermined average particle diameter is used, contamination with liquid crystal capsules each having a particle diameter that provides a low backscattering ratio can be prevented.

The resin emulsion and the liquid crystal emulsion may each be prepared by, for example, a mechanical emulsification method (including an ultrasonic method), a microchannel method, or a membrane emulsification method. The liquid crystal emulsion is preferably prepared by the mechanical emulsification method or the membrane emulsification method out of those methods. According to the mechanical emulsification method or the membrane emulsification method, an emulsion having a uniform particle size distribution can be suitably obtained.

A method of preparing the liquid crystal emulsion by the membrane emulsification method is not particularly limited. For example, a liquid crystal emulsion containing liquid crystal capsules each having a desired particle diameter may be obtained by passing a mixed liquid of the liquid crystal compound and a dispersion medium through a porous membrane having through-holes a plurality of times. The number of times that the mixed liquid is passed through the porous membrane may be set to, for example, 10 times or more. The hole diameter of each of the through-holes of the porous membrane is preferably from about 1 times to about 5 times as large as the diameter that the liquid crystal capsules are each desired to have. In addition, the flow rate of the dispersed liquid at the time of its passage through the porous membrane may be, for example, from 1 mL/min/cm$^2$ to 150 mL/min/cm$^2$, preferably from 3 mL/min/cm$^2$ to 90 mL/min/cm$^2$. In the PDLC layer formed by the drying of the emulsion application liquid, the particle diameter of each of the liquid crystal droplets may be larger or smaller than the particle diameter of each of the liquid crystal capsules in the application liquid by about 0.1 um. Reference may be made to the disclosures of, for example, JP 04-355719 A and JP 2015-40994 A (these literatures are incorporated herein by reference) for details about the membrane emulsification method.

A method of preparing the liquid crystal emulsion by the mechanical emulsification method (ultrasonic method) is also not particularly limited. For example, the liquid crystal emulsion containing the liquid crystal capsules having desired particle diameters may be obtained by irradiation of a mixed liquid containing a liquid crystal compound, a dispersant, and water with an ultrasonic wave having a frequency of from 1 kHz to 10 MHz. An irradiation time is, for example, from 1 second to 10 minutes, preferably 30 seconds or more and less than 2 minutes. When preliminary emulsification is performed by mechanical stirring with a homogenizer or the like before the irradiation with the ultrasonic wave, the irradiation time of the ultrasonic wave can be shortened. The particle diameter of each of the liquid crystal capsules before the irradiation with the ultrasonic wave (liquid crystal capsules obtained in the preliminary emulsification) is, for example, 1 mm or less, preferably 10 um or less, more preferably 5 um or less. In addition, for example, it is preferred that the irradiation with the ultrasonic wave be performed while the mixed liquid is cooled to a temperature that does not cause bumping (e.g., at 5°C or less or under cooling with ice water), that an irradiation area be increased as much as possible, and that the irradiation be performed while the mixed liquid is stirred with a rotor. In addition, when the mixed liquid is cooled with ice water after the irradiation with the ultrasonic wave, an increase in particle diameter of each of the liquid crystal capsules due to the coalescence can be suppressed.

The solid content concentration of the emulsion application liquid may be, for example, from 20 wt% to 60 wt%, preferably from 30 wt% to 50 wt%.

The viscosity of the emulsion application liquid may be appropriately adjusted so that its application to the first transparent conductive film may be suitably performed. The viscosity of the emulsion application liquid at the time of the application is preferably from 15 mPa·s to 300 mPa·s, more preferably from 20 mPa·s to 200 mPa·s, still more preferably from 30 mPa·s to 100 mPa·s. When the viscosity of the emulsion application liquid falls within the above-mentioned ranges, coarsening of the liquid crystal droplets caused by the aggregation and association of the liquid crystal capsules at the time of the drying can be prevented. Consequently, liquid crystal droplets each having a target particle diameter may be suitably obtained. The viscosity of the emulsion application liquid may be measured with, for example, a rheometer MCR302 manufactured by Anton Paar GmbH. The value of a shear viscosity under the conditions of 20°C and a shear rate of 1,000 (1/s) is used as the viscosity herein.

Any appropriate method may be adopted as a method of applying the emulsion application liquid. Examples thereof include a roll coating method, a spin coating method, a wire bar coating method, a dip coating method, a die coating method, a curtain coating method, a spray coating method, and a knife coating method (e.g., a comma coating method). Of those, a roll coating method is preferred. For example, reference may be made to the description of JP 2019-5698 A for the application by the roll coating method with a slot die.

The thickness of the applied layer is preferably from 5 um to 200 $\mu$m, more preferably from 6 um to 150 $\mu$m, still more preferably from 8 um to 120 $\mu$m.

B-2. PDLC Layer-forming Step

In the PDLC layer-forming step, the applied layer is dried to form a PDLC layer containing a polymer matrix and liquid crystal droplets dispersed in the polymer matrix.

The drying of the applied layer may be performed by any appropriate method. Specific examples of the drying method include natural drying, heat drying and hot-air drying. When the emulsion application liquid includes a cross-linking agent, the cross-linked structure of the polymer matrix may be formed at the time of the drying.

A drying temperature and a drying time are appropriately set in accordance with the kind of the dispersion medium, the concentration of the emulsion application liquid, or the like. The drying temperature is, for example, from 20°C to 150°C, and may be preferably from 25°C to 80°C. The drying time is, for example, from 1 minute to 180 minutes, and may be preferably from 2 minutes to 120 minutes.

B-3. Second Transparent Conductive Film-laminating Step

In the second transparent conductive film-laminating step, the second transparent conductive film is laminated on the formed PDLC layer. Thus, the PDLC film including the first transparent conductive film, the PDLC layer, and the second transparent conductive film in the stated order is obtained.

The lamination of the second transparent conductive film on the PDLC layer is performed so that the second transparent electrode layer side of the film may face the PDLC layer. From the viewpoint of obtaining sufficient adhesiveness and from the viewpoint of obtaining liquid crystal droplets oblate in the thickness direction, the lamination may be preferably performed while a lamination pressure of from 0.01 MPa to 10 MPa, more preferably a lamination pressure of from 0.05 MPa to 1.0 MPa is applied for from 0.1 second to 100 seconds with a laminator or the like.

Examples

The present invention is specifically described below by way of Examples. However, the present invention is by no means limited to these Examples. Measurement methods for characteristics are as described below. In addition, unless otherwise specified, "part(s)" and "%" in Examples and Comparative Example are by weight.

(1) Thickness

A section of the PDLC film was smoothened with a microtome to expose its PDLC layer. After that, the exposed section of the PDLC film was observed with a scanning electron microscope (SEM) and an objective lens having a magnification of 3,000 in a 30-micrometer square field of view. Film thickness evaluations of a transparent substrate layer, a transparent electrode layer, a refractive index-adjusting layer, a hard coat layer, and a PDLC layer were performed.

(2) Volume-average Particle Diameter and CV Value of Liquid Crystal Droplets in PDLC Layer

A sample for observation was prepared as in the section (1), and a region of 10 $\mu$m2 thereof was subjected to focused ion beam (FIB) processing and its sectional SEM image was taken with a focused ion beam-scanning electron microscope (FIB-SEM). The FIB processing was performed at intervals of 0.1 um up to 2 um. Each surface thereof was observed with an objective lens having a magnification of 3,000. Thus, three-dimensional information on all the liquid crystal droplets in the PDLC layer of 10 $\mu$mx 10 $\mu$m×2 um was constructed. The volume-average particle diameter of the liquid crystal droplets and a coefficient of variation in volume (CV value) calculated from the following equation were calculated from the information.

$$CV \ value = standard \ deviation \ of \ particle \ diameter$$

$$distribution \ on \ volume \ basis / volume\text{-}average \ particle \ diameter$$

(3) Volume Ratio of Liquid Crystal Droplets

A volume ratio of the liquid crystal droplets was calculated as follows: a volume ratio of liquid crystal droplets in the PDLC layer was calculated from three-dimensional information on liquid crystal droplets obtained in the same manner as in the section (2).

(4) Haze

Measurement was performed with a haze meter (manufactured by Murakami Color Research Laboratory Co., Ltd., product number: "HM-150L2N") .

(5) Total Light Transmittance

The total light transmittances at the time of application of a voltage of a sine wave of 150 V (60 Hz) and at the time of application of no voltage were measured with the haze meter.

(6) Backscattering Ratio

The backscattering ratios at the time of application of a voltage of a sine wave of 300 V (60 Hz) and at the time of application of no voltage were measured. The backscattering ratio was determined by: measuring a scattered light level every 5° of a polar angle with a goniophotometer (Nikka Densok Limited, model number: GP-4L) when laser light having a wavelength of 550 nm was allowed to enter from the vertical direction of the PDLC film and a direction of straight transmission was defined as a polar angle of 0°; then calculating a bidirectional scattering distribution function (BSDF) except specular reflection; and calculating the ratio of the quantity of light scattered behind the film to the quantity of the incident light.

[Example 1]

1. Production of First and Second Transparent Conductive Films

Both surfaces of a cycloolefin-based transparent substrate (manufactured by Zeon Corporation, norbornene-based resin film, product name: "ZF-16", thickness: 40 $\mu$m, Re[590]: 5 nm) were subjected to corona treatment. Then, a UV acrylic application liquid (manufactured by DIC Corporation, product name: "UNIDIC 8-17") was applied to each of the surfaces, and the solvent was dried. After that, the resultant was irradiated with UV light from a high-pressure mercury UV lamp at 300 mJ/m$^2$. Thus, a hard coat layer having a thickness of 1 $\mu$m was formed. Further, a SiOx (x=1.5) layer having a thickness of 3 nm, and a SiO$_2$ layer having a thickness of 17 nm formed on the SiOx layer were formed in the stated order by a sputtering method. Thus, a refractive index-adjusting layer was arranged. Next, a transparent electrode layer (ITO layer) having a thickness of 25 nm was formed on the refractive index-adjusting layer by the sputtering method, and was then crystallized by annealing at 150°C for 10 minutes. Thus, first and second transparent conductive films each having the configuration [hard coat layer/COP substrate/hard coat layer/refractive index-adjusting layer/transparent electrode layer] were obtained.

2. Production of Emulsion Application Liquid

(Emulsification of Liquid Crystal Compound)

37.7 Parts of a liquid crystal compound (manufactured by LCC Corporation, product name: "LCP#1837", birefringence $\Delta$n: 0.280 (ne=1.800, no=1.520), viscosity=25 mPa·s), 57.3 parts of pure water, and 5.0 parts of a dispersant (manufactured by Sanyo Chemical Industries, "NEWPOL PE128") were mixed, and stirred with a homogenizer at 100 rpm for 3 minutes to be coarsely dispersed. While the coarsely dispersed liquid was cooled with ice water, ultrasonic emulsification was performed with an ultrasonic homogenizer (Hielscher Ultrasonics GmbH, model number: "UP-200S") at 2.4 kHz for 1 minute to provide a liquid crystal emulsion. When the particle diameter of the resultant liquid crystal emulsion was analyzed by a laser diffraction method, it was recognized that liquid crystal capsules having a volume-average particle diameter of 0.36 um and a CV value of 0.36 were formed.

(Production of Application Liquid)

48 Parts of a urethane emulsion polymer dispersed liquid (product name: "NeoRez R-967" (manufactured by Kusumoto Chemicals, Ltd., solvent=water, solid content concentration: 40%), and a total of 2 parts of a leveling agent (manufactured by DIC Corporation, product name: "MEGAFACE F-444", solvent=water, solid content concentration: 10%) and a cross-linking agent (manufactured by Kusumoto Chemicals, Ltd., product name: "AqualenAKU", solvent=water, solid content concentration: 50%) were mixed into 50 parts of the liquid crystal emulsion obtained by the emulsification to produce an emulsion application liquid. The solid content refractive index of the urethane polymer dispersed liquid is 1.48.

3. Production of PDLC Film

The emulsion application liquid was applied to the surface of the first transparent conductive film on its transparent electrode layer side and was dried at room temperature for 1 hour to form a PDLC layer having a thickness of 35 um. After that, the second transparent conductive film was laminated thereon at 0.2 MPa for 1 second so that its transparent electrode layer-side surface faced the PDLC layer. Thus, a PDLC film (normal mode) was obtained.

Various characteristics of the obtained PDLC film were evaluated. The results are shown in Table 1.

Table 1

| Evaluation item | | Value |
|---|---|---|
| Haze (at the time of application of no voltage) | | 99% |
| Total light transmittance | At the time of application of no voltage | 58% |
| | At the time of application of voltage | 82% |
| Backscattering ratio | At the time of application of no voltage | 32% |
| | At the time of application of voltage | 11% |
| Average particle diameter of liquid crystal droplets | | 0.77 $\mu$m |
| CV value of particle diameters of liquid crystal droplets | | 0.40 |
| Volume ratio of liquid crystal droplets | | 25% |

As shown in Table 1, in the PDLC film obtained in Example 1, the haze and the backscattering ratio in a scattering state (at the time of application of no voltage) are 99% and 32%, respectively, and it is found that a practically sufficient haze and a high backscattering ratio of 30% or more are both achieved.

[Comparative Example 1]

A PDLC film was obtained in the same manner as in Example 1 except that an emulsion application liquid was prepared by setting the blending amount of the liquid crystal emulsion to 20 parts, and that the thickness of the PDLC layer was set to 25 um. Various characteristics of the obtained PDLC film were evaluated. The results are shown in Table 2.

Table 2

| Evaluation item | | Value |
|---|---|---|
| Haze (at the time of application of no voltage) | | 86% |
| Total light transmittance | At the time of application of no voltage | 73% |
| | At the time of application of voltage | 81% |
| Backscattering ratio | At the time of application of no voltage | 17% |
| | At the time of application of voltage | 9% |
| Average particle diameter of liquid crystal droplets | | 0.75 $\mu$m |
| CV value of particle diameters of liquid crystal droplets | | 0.39 |
| Volume ratio of liquid crystal droplets | | 9% |

As shown in Table 2, the average particle diameter and CV value of the liquid crystal droplets of the resultant PDLC film were substantially comparable to those of Example 1. However, the volume ratio of the liquid crystal droplets was 9%. In addition, the backscattering ratio at the time of application of no voltage was 17%, which was a value equal to about one half of that of Example 1.

[Reference Example 1]

A mixture of 50 parts of a liquid crystal material E7 (manufactured by LCC Corporation, Δn=0.22), 50 parts of HEMA, and 0.5 part of a UV initiator was applied onto the transparent conductive film used in Example 1. Another transparent conductive film was placed on the applied surface so that the application thickness became about 20 um, and the resultant was irradiated with UV light of 100 mW/cm$^2$ at 30°C (wavelength: 365 nm, black light) for 10 minutes. Thus, a PNLC film including a PNLC layer (thickness: 20 um) having a polymer generated in a network shape in a liquid crystal was obtained. The PNLC film was observed with a SEM. As a result, the volume-average ratio of liquid crystal domains was 50 wt% and the volume-average particle diameter of the domains was 0.8 um. Various characteristics of the resultant PNLC film were evaluated. The results are shown in Table 3.

Table 3

| Evaluation item | | Value |
|---|---|---|
| Haze (at the time of application of no voltage) | | 96% |
| Total light transmittance | At the time of application of no voltage | 77% |
| | At the time of application of voltage | 88% |
| Backscattering ratio | At the time of application of no voltage | 13% |
| | At the time of application of voltage | 7% |
| Average diameter of liquid crystal domains | | 0.8 μm |
| Volume ratio of liquid crystal domains | | 50% |

As shown in Table 3, the resultant PNLC film had a high volume ratio of liquid crystal domains in the PNLC layer. Meanwhile, the backscattering ratio at the time of application of no voltage was 13%, which was a significantly lower value than that of Example 1.

[Example 2]

1. Production of First and Second Transparent Conductive Films

First and second transparent conductive films each having the configuration [hard coat layer/COP substrate/hard coat layer/refractive index-adjusting layer/transparent electrode layer] were obtained in the same manner as in Example 1.

2. Production of Emulsion Application Liquid

(Emulsification of Liquid Crystal Compound)

A liquid crystal emulsion was obtained in the same manner as in Example 1 except that a liquid crystal material (ne=1.844, no=1.529, viscosity=480 mPa·s) having a birefringence of Δn=0.315 was used as the liquid crystal compound. When the particle diameter of the resultant liquid crystal emulsion was analyzed with a laser diffraction method, it was recognized that liquid crystal capsules having a volume-average particle diameter of 0.30 um were formed.

(Production of Application Liquid)

An emulsion application liquid was produced in the same manner as in Example 1 except that the above-mentioned liquid crystal emulsion was used.

3. Production of PDLC Film

A PDLC layer having a thickness of 22.7 um was formed in the same manner as in Example 1 except that: the above-mentioned emulsion application liquid was used; and the application thickness was changed. Subsequently, the second transparent conductive film was laminated thereon. Thus, a PDLC film was obtained. Various characteristics of the obtained PDLC film were evaluated. The results are shown in Table 4.

Table 4

| Evaluation item | | Value |
|---|---|---|
| Haze (at the time of application of no voltage) | | 99% |
| Total light transmittance | At the time of application of no voltage | 56% |
| | At the time of application of voltage | 81% |
| Backscattering ratio | At the time of application of no voltage | 37% |
| | At the time of application of voltage | 19% |
| Average particle diameter of liquid crystal droplets | | 0.40 μm |
| CV value of particle diameters of liquid crystal droplets | | 0.30 |
| Volume ratio of liquid crystal droplets | | 25% |

As shown in Table 4, in the PDLC film obtained in Example 2, the haze and the backscattering ratio in a scattering state (at the time of application of no voltage) are 99% and 37%, respectively, and it is found that a practically sufficient haze and a high backscattering ratio of 30% or more are both achieved.

Industrial Applicability

The PDLC film of the present invention is suitably used in various applications, such as a blind or curtain application and a display application.

Reference Signs List

**100** PDLC film
**10** first transparent conductive film
**12** first transparent substrate
**14** first transparent electrode layer
**20** PDLC layer
**22** polymer matrix
**24** liquid crystal droplet
**30** second transparent conductive film
**32** second transparent substrate
**34** second transparent electrode layer

**Claims**

1. A polymer dispersed liquid crystal film, comprising in the following order:

    a first transparent conductive film;
    a polymer dispersed liquid crystal layer; and
    a second transparent conductive film,
    wherein the polymer dispersed liquid crystal layer contains a polymer matrix and droplets of a liquid crystal compound dispersed in the polymer matrix,
    wherein an average particle diameter of the droplets when viewed from a direction perpendicular to a main surface of the polymer dispersed liquid crystal film is from 0.3 um to 0.9 um,
    wherein a volume ratio of the droplets in the polymer dispersed liquid crystal layer is from 20% to 70%,
    wherein the liquid crystal compound has a birefringence of from 0.20 to 0.50, and
    wherein the polymer dispersed liquid crystal layer has a thickness of from 5 um to 40 um.

2. The polymer dispersed liquid crystal film according to claim 1, wherein the polymer dispersed liquid crystal film has a haze at a time of application of a voltage lower than a haze at a time of application of no voltage.

3. The polymer dispersed liquid crystal film according to claim 1 or 2, wherein a content ratio of the liquid crystal compound in the polymer dispersed liquid crystal layer is from 30 wt% to 80 wt%.

4. The polymer dispersed liquid crystal film according to any one of claims 1 to 3, wherein the polymer dispersed liquid crystal film has a haze of 90% or more and a backscattering ratio of 30% or more at a time of application of no voltage.

5. A method of producing the polymer dispersed liquid crystal film of any one of claims 1 to 4, comprising:

applying an emulsion application liquid containing a resin for forming a polymer matrix and a liquid crystal compound to a surface of a first transparent conductive film to form an applied layer; and
drying the applied layer to form a polymer dispersed liquid crystal layer containing a polymer matrix and droplets of a liquid crystal compound dispersed in the polymer matrix.

6. The method of producing the polymer dispersed liquid crystal film according to claim 5, wherein the emulsion application liquid contains liquid crystal compound particles having an average particle diameter of from 0.2 um to 0.9 $\mu$m.

Fig.1

100

32
34
30
20
14
12
10

Fig.2

(a)

20 { 24
       22

30

10

(b)

20
24  22

d

## INTERNATIONAL SEARCH REPORT

| | International application No. |
|---|---|
| | **PCT/JP2022/014646** |

**A. CLASSIFICATION OF SUBJECT MATTER**

*G02F 1/1334*(2006.01)i; *G02F 1/13*(2006.01)i
FI:   G02F1/1334; G02F1/13 505

According to International Patent Classification (IPC) or to both national classification and IPC

**B. FIELDS SEARCHED**

Minimum documentation searched (classification system followed by classification symbols)

G02F1/1334; G02F1/13

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 05-107562 A (NIPPON SHEET GLASS COMPANY, LIMITED) 30 April 1993 (1993-04-30)<br>paragraphs [0012]-[0025], [0037]-[0057], fig. 1 | 1-6 |
| A | JP 07-234397 A (HITACHI CABLE, LIMITED) 05 September 1995 (1995-09-05)<br>entire text, all drawings | 1-6 |
| A | JP 08-194211 A (HITACHI CABLE, LIMITED) 30 July 1996 (1996-07-30)<br>entire text, all drawings | 1-6 |
| A | US 2005/0259196 A1 (EASTMAN KODAK COMPANY) 24 November 2005 (2005-11-24)<br>entire text, all drawings | 1-6 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## EP 4 318 112 A1

**INTERNATIONAL SEARCH REPORT**
**Information on patent family members**

International application No.

**PCT/JP2022/014646**

| Patent document cited in search report | | | Publication date (day/month/year) | Patent family member(s) | | | Publication date (day/month/year) |
|---|---|---|---|---|---|---|---|
| JP | 05-107562 | A | 30 April 1993 | US | 5486937 | A | |
| | | | | column 2, line 38 to column 4, line 34, column 6, line 1 to column 8, line 57, fig. 1 | | | |
| | | | | DE | 4234981 | A1 | |
| | | | | FR | 2682780 | A1 | |
| JP | 07-234397 | A | 05 September 1995 | (Family: none) | | | |
| JP | 08-194211 | A | 30 July 1996 | (Family: none) | | | |
| US | 2005/0259196 | A1 | 24 November 2005 | (Family: none) | | | |

Form PCT/ISA/210 (patent family annex) (January 2015)

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4355719 A
- JP 2015040994 A
- JP 2019005698 A

**Non-patent literature cited in the description**

- **G. PAUL MONTGOMERY JR.** Liquid-Crystal Devices and Materials. *Proc. SPIE,* 01 June 1991, vol. 1455